## Europäisches Patentamt

## European Patent Office

## Office européen des brevets

(19)

(11) Veröffentlichungsnummer: **0 204 259**
**B1**

(12) **EUROPÄISCHE PATENTSCHRIFT**

(45) Veröffentlichungstag der Patentschrift:
08.08.90

(51) Int. Cl.⁵: **G01S 1/16**

(21) Anmeldenummer: **86107232.0**

(22) Anmeldetag: **28.05.86**

(54) Zweifrequenzinstrumentenlandesystem.

(30) Priorität: **01.06.85 DE 3519665**

(43) Veröffentlichungstag der Anmeldung:
**10.12.86 Patentblatt 86/50**

(45) Bekanntmachung des Hinweises auf die Patenterteilung:
**08.08.90 Patentblatt 90/32**

(84) Benannte Vertragsstaaten:
**DE FR GB NL**

(56) Entgegenhaltungen:
FR-A- 2 302 531
US-A- 2 283 677
US-A- 3 711 857
US-A- 3 716 863
US-A- 4 268 829

E. Kramar:"Funksysteme für Ortung und Navigation"
Verlag Berliner Union GmbH Stuttgart 1973, S.197-199

(73) Patentinhaber: **Standard Elektrik Lorenz Aktiengesellschaft, Lorenzstrasse 10, D-7000 Stuttgart 40(DE)**

(72) Erfinder: **Greving, Gerhard, Dr., Habichthöhe 62, D-7101 Untergruppenbach(DE)**
Erfinder: **Wirth, Hugo, Schauchertstrasse 33, D-7254 Hemmingen(DE)**
Erfinder: **Poschadel, Werner, Beate-Paulus-Strasse 2, D-7014 Kornwestheim(DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30(DE)**

ACTORUM AG

**Beschreibung**

Die Erfindung geht aus von einem Zweifrequenz-instrumentenlandesystem wie im Oberbegriff des Patentanspruches angegeben.

Ein solches Zweifrequenzinstrumentenlandesystem ist allgemein bekannt. Beispielsweise wird auf folgende Literaturstellen hingewiesen: "Funksysteme für Ortung und Navigation", herausgegeben von E.Kramar, Verlag Berliner Union GmbH, Stuttgart 1973; Aufsätze in "Elektrisches Nachrichtenwesen", 1984, Band 58, Nr. 3, 1984, Seiten 270-282; deutsches Patent Nr. 25 08 539.

Bei einem solchen Zweifrequenzinstrumentenlandesystem ist ein hohes Capture-Ratio wünschenswert. Unter Capture-Ratio versteht man das Verhältnis der Amplituden der Signale, die über das CSB-Kurs- oder das Clearance-Strahlungsdiagramm, gemessen in der Landekursrichtung, abgestrahlt werden.

Aus US-A 3 711 857 ist ein Capture-Effekt System bekannt, bei dem ein brauchbares Capture-Verhältnis mit nur einer einzigen Antennenanlage, die sowohl Clearance- als auch Kurssignale abstraht, erreicht wird. Die Speisung des Antennensystems erfolgt über breitbandige Brücken oder Hybrid-Mischer, die die verschiedenen Signalanteile mischen und den entsprechenden Elementen der Antennenanlage zuführen.

Aus US-A 4 268 829 ist weiterhin ein adaptives Signalverarbeitungssystem bekannt, bei dem mittels einer Hilfsantenne Einzüge im Strahlungsdiagramm der Hauptantenne erzeugt werden. Hilfs- und Hauptantenne werden mit Signalen der gleichen Frequenz gespeist. Phasenlage und Amplitude des von der Hilfsantenne abgestrahlten Signals werden von einem Prozessor, abhängig von der Richtung, in der das Strahlungsdiagramm einen Einzug haben soll, geregelt. Die bekannte Anordnung erlaubt im Empfangsbetrieb die Ausschaltung von Störungen und im Sendebetrieb die Ausblendung von unerwünschten Mithörern.

Aufgabe der Erfindung ist es, bei einem Zweifrequenzinstrumentenlandesystem mit getrennter Kurs- und Clearance-Antenne mit möglichst einfachen Mitteln ein hohes Capture-Ratio zu erzeugen.

Die Lösung dieser Aufgabe erfolgt mit den im Patentanspruch angegebenen Mitteln.

Bei dem neuen Zweifrequenzinstrumentenlandesystem ist ein Capture-Ratio von größer 15dB möglich. Das Clearance-Strahlungsdiagramm weist in der Richtung des Landekurses einen starken Einzug auf. Der erforderliche Aufwand ist gering. Bei der einfachsten Realisierung sind gegenüber dem bekannten Zweifrequenzinstrumentenlandesystem zusätzlich lediglich zwei Richtkoppler und ein Kabel erforderlich. Bei einer etwas aufwendigen Lösung ist zusätzlich ein einstellbares Dämpfungsglied vorgesehen. Damit ist es möglich, das Capture-Ratio auf den gewünschten Wert einzustellen.

Die Erfindung wird anhand der Zeichnungen beispielsweise näher erläutert. Es zeigt:

Fig. 1 eine Anordnung zur Verdeutlichung des der Erfindung zugrunde liegenden Prinzips, und

Fig. 2 eine konkrete Ausführungsform der Erfindung.

Auf die Funktionsweise eines Zweifrequenzlandesystems wird hier nicht näher eingegangen, da seine Realisierung allgemein bekannt ist. Es werden nur die zum Verständnis der Erfindung erforderlichen Merkmale erwähnt.

Von einem Zweifrequenzinstrumentenlandesystem werden Signale über ein Kurs- und ein Clearance-Strahlungsdiagramm abgestrahlt. Die Frequenzen der Signale für die beiden Strahlungsdiagramme unterscheiden sich um 9 kHz. Das CSB-Clearance-Strahlungsdiagramm weist eine geringere Richtwirkung als das CSB-Kurs-Strahlungsdiagramm auf. Sowohl zur Erzeugung des Kurs-Strahlungsdiagramms als auch des Clearance-Strahlungsdiagramms werden Signale verwendet, die nur aus Seitenbandsignalen (SBO (für "Kurs") bzw. SBO' (für "Clearance")) und die aus Seitenbandsignalen und Trägersignal (CSB (für "Kurs") bzw. CSB' (für "Clearance")) bestehen. Die Antennenanlagen für das Kursstrahlungsdiagramm und für das Clearance-Strahlungsdiagramm sind räumlich voneinander getrennt. (Es gibt auch Zweifrequenzinstrumentenlandesysteme, bei denen die beiden Antennenanlagen ineinander integriert sind. Solche Systeme werden hier jedoch nicht betrachtet. Bei solchen Systemen sind beispielsweise Rückwirkungen auf die Sender vor handen, was zu Schwierigkeiten bei der Erreichung des vorgeschriebenen Spektrums führt). Die Antennenanlage für das Kurs-Strahlungsdiagramm weist wesentlich mehr Einzelantennen als diejenige für das Clearance-Strahlungsdiagrammen auf. Häufig wird das CSB'-Signal nur über die mittlere Einzelantenne der Clearance-Antennenanlage abgestrahlt. Von diesem Fall wird nachfolgend ausgegangen.

Das Signal CSB' wird in bekannter Weise erzeugt. Anstelle dieses jedoch direkt einer Einzelantenne 3 der Clearance-Antennenanlage zuzuführen wird es dieser Einzelantenne 3 über einen Richtkoppler 2 zugeführt. Die Speiseleitung ist mit 8 bezeichnet. In dem Richtkoppler wird ein kleiner Teil des Signals CSB' ausgekoppelt. Dieser ausgekoppelte Signalanteil CSB'* wird über eine Leitung 12 einem zweiten Richtkoppler 5 zugeführt. Der nicht ausgekoppelte Signalanteil von CSB' ist mit CSB'** bezeichnet. Dieser zweite Richtkoppler 5 ist in eine Leitung 9 eingefügt, über die das Signal CSB der Kurs-Antennenanlage 7 zugeführt wird. Der Kurs-Antennenanlage ist ein HF-Verteilernetzwerk 6 vorgeschaltet, welches das CSB-Signal in der vorgeschriebenen Weise auf die Einzelantennen aufteilt. In dem zweiten Richtkoppler wird dem Signal CSB das Signal CSB'* überlagert. Somit wird von den Einzelantennen der Kurs-Antennenanlage nicht nur das Signal CSB sondern auch der Teil CSB'* des "Signals CSB' abgestrahlt. Die Weglänge für das Signal CSB'* vom ersten Richtkoppler 2 zu den Einzelantennen 7 der Kurs-Antennenanlage ist so gewählt, daß die Phasendifferenz zwischen dem CSB' Strahlungsdiagramm der Clearance-Antennenanlage über das der Signalanteil CSB'** abgestrahlt wird, und dem CSB-Strahlungsdiagramm der Kurs-Antennenanlage, über das der Signalanteil CSB'* abgestrahlt wird, im Fernfeld 180° ist. Dies könnte im Prinzip durch geeignete Wahl der Länge der Leitung 12 erreicht werden. Durch die Überlagerung der Signale CSB'** und CSB'*, die eine Phasendifferenz von 180° zueinander aufweisen, wird erreicht, daß in der Richtung des Landekurses ein starker Einzug des durch Überlagerung von CSB'** und CSB'* erzeugten Clearance-Strahlungsdiagramms vorhanden ist. Die Tiefe des Einzugs hängt davon ab, wie groß der Anteil des ausgekoppelten Signals CSB'* am Signal CSB' ist.

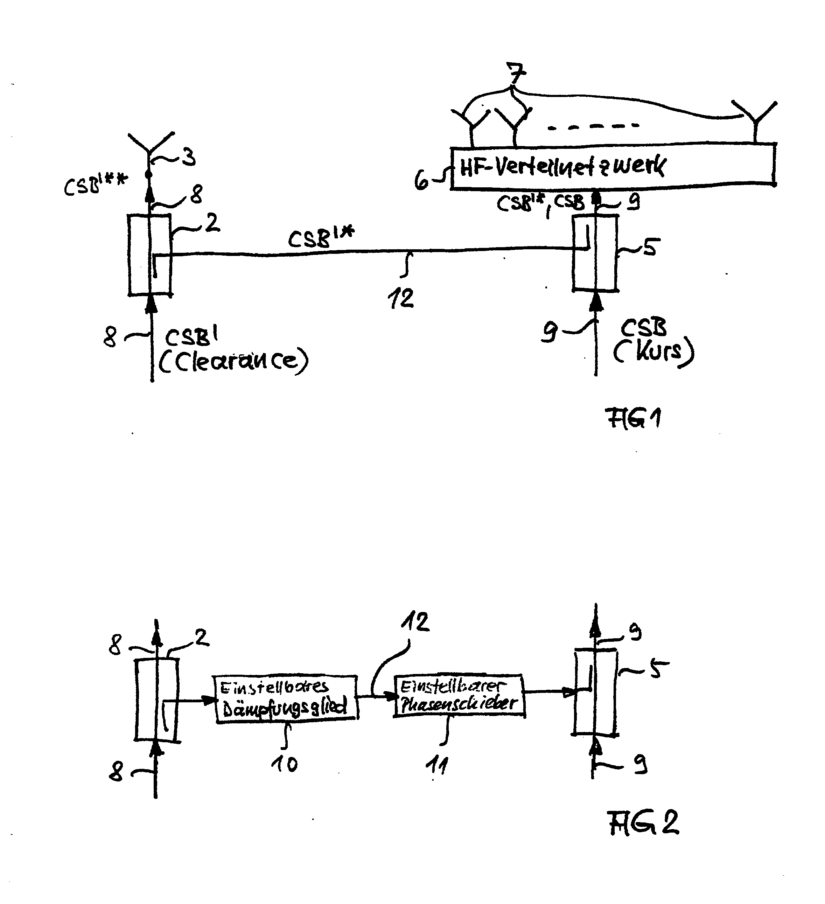

Bei dem Ausführungsbeispiel nach Fig. 2 sind in die Leitung 12 zwischen erstem 2 und zweitem 5 Richtkoppler ein einstellbares Dämpfungsglied 10 und ein einstellbarer Phasenschieber 11 eingefügt. Damit ist es einerseits möglich, das Capture-Ratio zusätzlich zu den Koppelfaktoren der Richtkoppler 2 und 5-auf den genauen gewünschten Wert einzustellen, nämlich durch geeignete Wahl des Dämpfungsfaktors. Andererseits ist es möglich, die gewünschte Phasendifferenz von 180° genau einzustellen.

Bei den Darstellungen der Fig. 1 und wurde der Übersichtlichkeit wegen darauf verzichtet, darzustellen, wie die Signale SBO und SBO' den jeweiligen Antennenanlagen zugeführt werden.

## Patentansprüche

1. Zweifrequenz-Instrumentenlandesystem mit
- einer Kurs-Antennenanlage (6, 7), der über Speiseleitungen (9) jeweils ein Träger/Seitenbandsignal CSB und ein Nur-Seitenbandsignal SBO einer ersten Frequenz zugeführt werden, deren Überlagerung im Feld die Kursdiagramme ergibt,
- einer separaten Clearance-Antennenanlage (3), der über Speiseleitungen (8) ein Träger/Seitenbandsignal CSB' und ein Nur-Seitenbandsignal SBO' einer zweiten Frequenz zugeführt werden, deren Überlagerung im Feld die Clearance-Diagramme ergibt, dadurch gekennzeichnet, daß
- die Speiseleitung (8) der Clearance-Antennenanlage (3) für das CSB'-Signal und die Speiseleitung (9) der Kurs-Antennenanlage (6, 7) für das CSB-Signal über eine Koppelvorrichtung (2, 5, 10, 12, 12) miteinander verbunden sind, durch welche ein Teil (CSB'*) des CSB'-Signals zumindest der Mehrzahl der Antennen der Kurs-Antennenanlage mit einer Phasenlage zugeführt wird, bei der sich im Fernfeld eine Phasenverschiebung von 180° zwischen den über die Clearance-Antennenanlage und über die Kurs-Antennenanlage abgestrahlten CSB'-Signalanteilen ergibt,
- die Koppelvorrichtung eine Hochfrequenzleitung (12) sowie in der Leitung angeordnete Einrichtungen (10, 11) zur Dämpfung und Phasenschiebung des ausgekoppelten Teils des CSB'-Signals enthält.

## Claims

1. Two-frequency instrument landing system comprising
- a course antenna array (6, 7) which is fed via feeder lines (9) with a carrier/sideband signal CSB and a sideband-only signal SBO of a first frequency whose superposition in the field gives the course patterns, and
- a separate clearance antenna array (3) which is fed via feeder lines (8) with a carrier/sideband signal CSB, and a sideband-only signal SBO' of a second frequency whose superposition in the field gives the clearance patterns, characterized in
- that the feeder line (8) of the clearance antenna array (3) for the CSB' signal and the feeder line (9) of the course antenna array (6, 7) for the CSB signal are interconnected via a coupling facility (2, 5, 10, 12, 12) which feeds a portion (CSB'*) of the CSB, signal to at least the majority of the antennas of the course antenna array in a phase position in which in the far field a phase difference of 180° is obtained between the CSB' signal portions transmitted via the clearance antenna array and the CSB' signal portions transmitted via the course antenna array, and
- that the coupling facility includes a radio-frequency line (12) and devices (10, 11) inserted in the line for attenuating and phase-shifting the extracted portion of the CSB' signal.

## Revendications

1. Système d'atterrissage aux instruments à deux fréquences comportant:
- un ensemble d'antennes pour "Trajectoire" (6, 7), auquel sont appliqués, par l'intermédiaire de conducteurs d'alimentation (9), respectivement un signal porteuse/bande latérale CSB et un signal seulement-bande latérale SBO à une première fréquence, la superposition desdits signaux dans le champ produisant les diagrammes de "Trajectoire",
- un ensemble séparé d'antennes pour "Autorisation d'atterrir" (3), auquel sont appliqués, par l'intermédiaire de conducteurs d'alimentation (8), un signal porteuse/bande latérale CSB' et un signal seulement-bande latérale SBO' à une seconde fréquence, la superposition desdits signaux dans le champ produisant les diagrammes d'"Autorisation d'atterrir", caractérisé en ce que:
- le conducteur d'alimentation (8) de l'ensemble d'antennes pour "Autorisation d'atterrir" (3), qui transmet le signal CSB', et le conducteur d'alimentation (9) de l'ensemble d'antennes pour trajectoire (6, 7), qui transmet le signal CSB' sont reliés entre eux par l'intermédiaire d'un dispositif de couplage (2, 5, 10, 12, 12) par lequel une partie (CSB'*) du signal CSB' est appliquée au moins à plusieurs des antennes de l'ensemble d'antennes pour trajectoire avec un phasage pour lequel, dans le champ lointain, on obtient une différence de phase de 180° entre les parties du signal CSB' qui sont émises par l'intermédiaire de l'ensemble d'antennes pour "Autorisation d'atterrir" et par l'intermédiaire de l'ensemble d'antennes pour trajectoire,
- le dispositif de couplage contient un conducteur haute-fréquence (12) ainsi que des dispositifs (10, 11) prévus dans le conducteur en vue d'un amortissement et d'un déphasage de la partie découplée du signal CSB'.

CSB'** 3

8

CSB'* 7

6 HF-Verteilnetzwerk

CSB'*, CSB 9

2

12 5

8 CSB' (Clearance)

9 CSB (Kurs)

**FIG 1**

8 2 12 9

Einstellbares Dämpfungsglied

Einstellbarer Phasenschieber

5

8 10 11 9

**FIG 2**